# EUROPEAN PATENT APPLICATION

(11) **EP 2 451 252 A1**
(43) Date of publication of application: **09.05.2012**
(21) Application number: 10793981.1
(22) Date of filing: 11.06.2010
(51) Int. Cl.: H05B 37/02

(54) **LIGHTING SYSTEM**

(30) Priority: 03.07.2009 JP 2009158683
(71) Applicant: Optex Co., Ltd., Shiga 520-0101 (JP)
(72) Inventor: NAGANO Masakazu, Otsu-shi Shiga 520-0101 (JP); NAKAGAWA Hiroshi, Otsu-shi Shiga 520-0101 (JP); SAWAI Masahiko, Otsu-shi Shiga 520-0101 (JP); MIZUTA Takahiro, Otsu-shi Shiga 520-0101 (JP); MATSUMOTO Kunihiro, Otsu-shi Shiga 520-0101 (JP); AMANO Hiroyuki, Otsu-shi Shiga 520-0101 (JP); SAKAMOTO Kazutaka, Otsu-shi Shiga 520-0101 (JP); AOYAMA Shinya, Otsu-shi Shiga 520-0101 (JP); KIMURA Satoshi, Otsu-shi Shiga 520-0101 (JP); SAITO Masanori, Otsu-shi Shiga 520-0101 (JP); MAGAWA Tadashi, Otsu-shi Shiga 520-0101 (JP); KOMAI Manabu, Otsu-shi Shiga 520-0101 (JP); SERATA Yuuichi, Otsu-shi Shiga 520-0101 (JP)
(74) Representative: Grünecker, Kinkeldey, Stockmair & Schwanhäusser
(86) International application number: PCT/JP2010/059927
(87) International publication number: WO 2011/001811

(57) **Abstract**

In a system for controlling a lighting setting in accordance with sensing information, it is possible to provide a technique to flexibly respond to the changes in system specification, the addition of sensors, and the like. A lighting unit (1) performs wireless communication with a PC (2), acquires a control program (101), and stores the acquired control program (101) into a memory (142). The control program (101) is a program corresponding to a sensor (15). A CPU (141) executes the control program (101) to acquire sensing information from the sensor (15) and then outputs a control signal in accordance with the sensing information to an LED driver (12). An LED (11) emits light on the basis of the setting in accordance with the sensing information. In order to change the lighting setting in accordance with the sensing information, an updated control program (101) is received from the PC (2) and the control program (101) stored in the memory (142) is updated therewith.

## Description

### Technical Field

The present invention relates to a lighting system, and more particularly to a system for controlling a lighting device by a setting in accordance with an external environment.

### Background Art

There are systems which detect the conditions of the external environment and control lighting devices by a setting in accordance with the external environment. There is a system, for example, which turns on lighting in a facility in response to detection of a human body by a human body sensor. Since the lighting is turned on only when somebody is present in the facility, the system has an effect of reducing power consumption. The system has another effect of warning an intruder in a facility which is off limits to any one without permission during the night. Provided is another system which detects the illuminance in the surroundings by using an illuminance sensor and turns on lighting when it is dark in the surroundings.

These systems each consist of a sensor for detecting the conditions of the external environment, a control hardware for outputting a control signal in accordance with condition information inputted from the sensor, a driver IC for driving a lighting device in accordance with the control signal, and the like. The algorithm for determining how to control the lighting device in accordance with the conditions of the external environment detected by the sensor is implemented by a logic circuit incorporated in the control hardware.

Therefore, in the cases where the environment in which the lighting system is used is changed, where the setting of the lighting device for a specific condition detected by the sensor is intended to be changed, where the purpose of using the lighting system is changed, or the like, it is necessary to design a hardware in accordance with the changed specification.

The technique of Patent document 1 described below makes it possible to perform a setting of a lighting control system by using communication. From a hand held programming device to a communication equipment via wireless communication, an instruction signal to be used to set the lighting control system is sent. The communication equipment performs settings of equipments such as a lighting device, a sensor, and the like, on the basis of the received instruction signal.

### Prior-Art Documents

### Patent Documents

[Patent Document 1] Japanese Patent Application Laid Open Gazette No. 2008-533669

In the case where the logic to output a control signal in accordance with the condition information inputted from the sensor is implemented by a hardware, there arises a problem that it takes time and cost to respond to specification changes.

In Patent Document 1, though the settings of the equipments are performed by using communication, only some of hardware settings such as an output level or the like can be changed.

### Disclosure of Invention

It is an object of the present invention to construct a lighting system which can flexibly respond to specification changes, at low cost.

The present invention is intended for a lighting system. According to the present invention, the lighting system comprises a lighting device, a driver, a sensor interface, a program storage part, a processing unit, and an input interface. The driver controls the lighting device. The program storage part stores therein a control program to be used to control the lighting device on the basis of sensing information which is inputted from a sensor connected to the sensor interface. The processing unit inputs sensing information from the sensor interface and executes the control program stored in the program storage part, to thereby output a control signal corresponding to the sensing information to the driver. The input interface inputs the control program corresponding to the sensor connected to the sensor interface from the outside.

In order to change a lighting control in accordance with the sensing information, it is only necessary to update the control program. It is not necessary to change a hardware logic circuit, and it is therefore possible to reduce the time and cost required for specification change of the lighting system.

According to a preferred embodiment of the present invention, the lighting system further comprises an additional sensor interface for connecting an additional sensor thereto. The processing unit includes an additional sensor control part for inputting thereto sensing information from the additional sensor interface and executing an additional control program stored in the program storage part, to thereby output a control signal corresponding to the sensing information to the driver.

The lighting system of the present invention has an excellent effect not only on the change in the lighting setting in accordance with the sensing information but also on a system change such as addition of a new sensor. Since the lighting system stores a control program corresponding to a newly added sensor in the program storage part, the lighting system can control the setting of the lighting device on the basis of the sensing information outputted from the newly added sensor. In the future, even in a case where a new sensor is developed, it is easy to incorporate a new sensor and a desired control operation into the lighting system.

These and other objects, features, aspects and advantages of the present invention will become more apparent from the following detailed description of the present invention when taken in conjunction with the accompanying drawings.

### Brief Description of Drawings

[Fig. 1] is a view showing a maintenance work for a lighting system;
[Fig. 2] is a block diagram showing the lighting system; and
[Fig. 3] is a block diagram showing the lighting system to which an additional sensor is added.

### Best Mode for Carrying Out the Invention

### {1. Brief Description of Lighting System}

Hereinafter, with reference to figures, description will be made on a lighting system in accordance with a preferred embodiment of the present invention. The lighting system of the preferred embodiment comprises a lighting unit 1 in which a LED lighting device, a sensor, and the like are formed integrally, a personal computer (hereinafter, referred to as a PC) 2 used for the maintenance of the lighting unit 1, and the like.

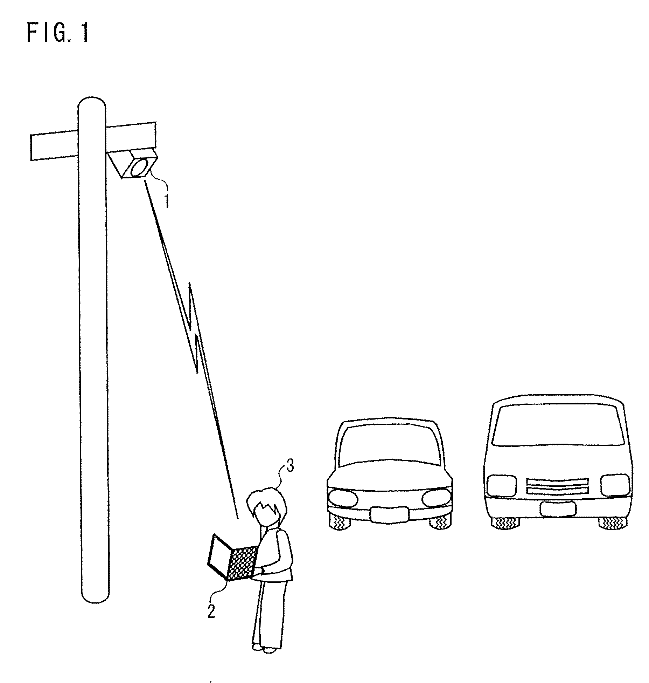

Fig. 1 is a view showing a lighting system which is set up in a parking area. In the parking area, a pole is set up and the lighting unit 1 is attached to an upper portion of the pole. The lighting unit 1 can input sensing information thereto from various sensors and control the setting of the lighting device in accordance with the sensing information.

As an example, when detection information of a human body is inputted from a human body sensor during the night, the lighting unit 1 turns on the lighting device with 100 % output to brighten the parking area. Then, when no detection information of a human body is inputted thereto, the lighting unit 1 reduces the brightness in the parking area to 50 %, to thereby reduce power consumption. Thus, by controlling the lighting output as necessary, it is possible to achieve an environmentally friendly lighting system.

As another example, the lighting unit 1 detects the illuminance in the parking area from an illuminance sensor and reduces the intensity of lighting in the parking area when the illuminance is not lower than a certain level. Then, when the illuminance is lower than the certain level, the lighting unit 1 increases the intensity of lighting in the parking area. It is thereby possible to maintain the illuminance in the parking area at a constant level while reducing the power consumption.

Fig. 1 shows a serviceman 3. The serviceman 3 uses the PC 2 to perform the maintenance of the lighting unit 1 via wireless communication. A maintenance method will be discussed in detail later, and the serviceman 3 can easily perform the maintenance of the lighting unit 1 by performing wireless communication between the PC 2 and the lighting unit 1 in the preferred embodiment.

### {2. Constitution of Lighting Unit}

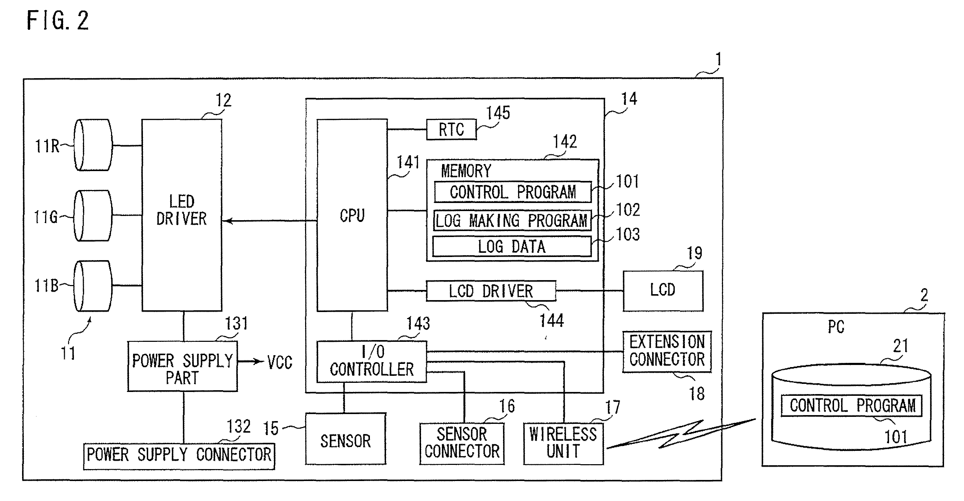

Next, with reference to Fig. 2, description will be made on a constitution of the lighting unit 1. The lighting unit 1 comprises an LED (Light Emitting Diode) 11. In the preferred embodiment, the LED 11 comprises a red LED 11R, a green LED 11G, and a blue LED 11B. The lighting device is not limited to the LED, but other light sources may be used. Further, as the LED, a white LED having different color temperature may be also used, as well as the three color (RGB) LEDs.

To the LED 11, an LED driver 12 is connected. The LED driver 12 is a unit consisting of a single IC or a plurality of ICs, which can individually control respective outputs of the LEDs 11R, 11G, and 11B. The LED driver 12 individually controls the respective outputs of the LEDs 11R, 11G, and 11B, to thereby emit light of various colors. Each of the LEDs 11R, 11G, and 11B consists of a single LED element or a plurality of LED elements.

The LED driver 12 is supplied with electric power from a power supply part 131. The power supply part 131 is connected to a power supply connector 132. By connecting the power supply connector 132 to a commercial power supply, electric power is supplied to devices in the lighting unit 1, including the LED driver 12.

The lighting unit 1 comprises a control part 14 for generally controlling the lighting unit 1. The control part 14 comprises a CPU (Central Processing Unit) 141, a memory 142, an I/O controller 143, an LCD (Liquid Crystal Display) driver 144, and an RTC (Real Time Clock) 145.

In the memory 142, a control program 101 is stored. The control program 101 is a program used to control the LED 11. The control program 101 is a program used to control the LED 11 on the basis of sensing information detected by a sensor 15. When the CPU 141 executes the control program 101, the LED 11 is controlled in accordance with the sensing information.

In the memory 142, a log making program 102 and log data 103 are stored. When the LED 11 is controlled on the basis of the control program 101, the log making program 102 stores a control record of the LED 11 into the memory 142 as log data 103.

Though not shown, a basic program such as an initial program used to perform system check and communication control of the lighting unit 1, or the like, in the memory 142.

As the memory 142, a rewritable flash memory or the like may be used. As discussed later, the control program 101 is sometimes updated in accordance with the specification change of the lighting system. By writing the updated control program into the rewritable memory 142, it is possible to freely change an operation of the lighting system. The basic program used to control the lighting unit 1 may be stored in a ROM which is separately provided. Further, the log making program 102 may be stored in a ROM as a standard program. The CPU 141 may comprise a memory which stores therein these various programs.

The I/O controller 143 is connected to the CPU 141. The I/O controller 143 is also connected to the sensor 15, a sensor connector 16, a wireless unit 17, and an extension connector 18 and controls input/output of data between these devices and the CPU 141.

The sensor 15 is a sensor which is connected to the lighting unit 1 by default. The above-described control program 101 is a program corresponding to the sensor 15. As the sensor 15, for example, a human body sensor, an illuminance sensor, a temperature sensor, an earthquake sensor, a fire sensor, or the like may be used.

To the sensor connector 16, various additional sensors are connected. The types of sensors to be added are not particularly limited. In a case where a human body sensor is attached as the default sensor 15, for example, when an illuminance sensor is intended to be additionally attached, the illuminance sensor has only be attached to the sensor connector 16.

When an additional sensor is attached to the sensor connector 16, the lighting system controls the lighting setting also on the basis of sensing information inputted from the additional sensor. By additionally storing a control program corresponding to the additional sensor into the memory 142, the lighting unit 1 can perform the lighting control in accordance with the additional sensor.

The wireless unit 17 performs wireless communication with the PC 2. In the preferred embodiment, the wireless unit 17 performs communication using ZigBee. As wireless communication, infrared communication and wireless LAN of iEEE802.11 or the like may be used. The lighting unit 1 uses the wireless unit 17 to acquire the control program 101 stored in a storage part 21 of the PC 2.

The extension connector 18 is a connector used for connecting an extension device thereto. To the extension connector 18, a device for extending the function of the lighting unit 1 or the like is connected. Alternatively, there may be another case where a communication cable is connected to the extension connector 18 and the extension connector 18 is connected to the PC 2 through the communication cable. The serviceman 3 connects the PC 2 and the extension connector 18 with the communication cable, for example, to thereby transfer the control program 101 from the PC 2 to the lighting unit 1.

To the LCD driver 144, an LCD 19 is connected. The LCD 19 is a small-sized monitor having a size of, e.g., about 3 cm in length and about 10 cm in width and capable of displaying various condition information of the lighting unit 1. Alternatively, by using an output port of the CPU 141 to light up or blink a display LED, various condition information of the lighting unit 1 may be displayed.

### {3. Relation between Sensor and Control Program}

As discussed above, the control program 101 used to control the LED 11 is stored in the memory 142. The control program 101 is a program corresponding to the sensor 15. The control program 101 is a program used to control the LED 11 on the basis of the sensing information detected by the sensor 15.

It is assumed that the sensor 15 is, for example, a human body sensor. When the sensor 15 detects a human body, the sensor 15 notifies the CPU 141 of the detection information of the human body through the I/O controller 143. The CPU 141 executes the control program 101, and when the detection information of the human body is inputted thereto during the night, the CPU 141 generates a control signal to light up the LED 11 with, for example, 100 % output. The control signal generated by the CPU 141 is outputted to the LED driver 12, and the LED driver 12 controls the LED 11 on the basis of the control signal. The LED 11 is thereby lit up with 100 % output, to thereby brighten the parking area.

It is assumed that the sensor 15 does not notify the CPU 141 of detection information of the human body after a lapse of time. It is also assumed that the control program 101 has an algorithm to reduce the intensity of lighting to 50 % output at the point of time when one minute elapses after no human body is detected. The CPU 141 sends a control signal to reduce the intensity of light of the LED 11 to 50 % output at the point of time when one minute elapses after the detection information of the human body is received from the sensor 15 last time. Thus, the lighting setting of the LED 11 is changed on the basis of the sensing information and the operation is determined by the control program 101.

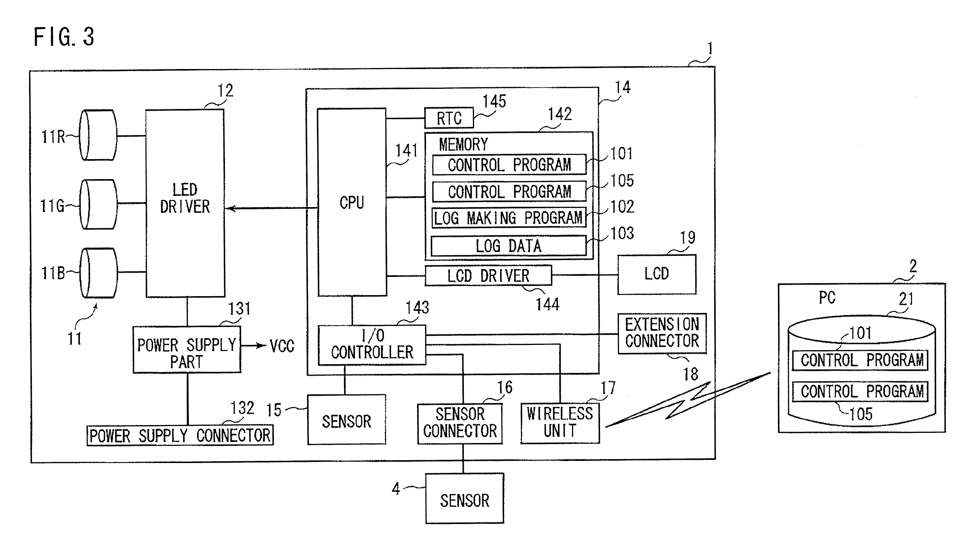

It is assumed that a new additional sensor 4 is connected to the sensor connector 16. The control program 101 described above is a program corresponding to the sensor 15. Then, as shown in Fig. 3, a control program 105 for the additional sensor 4 is prepared in the storage part 21 of the PC 2. The serviceman 3 transfers the control program 105 to the lighting unit 1 via wireless communication. The transferred control program 105 is stored into the memory 142.

It is assumed, for example, that the additional sensor 4 is an illuminance sensor. The additional sensor 4 detects the illuminance in the parking area and notifies the CPU 141 of the detection information through the I/O controller 143. The CPU 141 executes the control program 105, and when the detection information of the illuminance is inputted thereto, the CPU 141 generates a control signal in accordance with the illuminance. The output of the LED 11 is controlled by the generated control signal.

On the basis of the control program 105, the CPU 141 generates a control signal to turn off the LED 11 when the parking area has sufficiently high illuminance, for example, during the day. When it is slightly dark in the parking area, the CPU 141 generates a control signal to light the LED 11 with 50 % output. When it is dark in the parking area in the evening, the CPU 141 generates a control signal to light up the LED 11 with 100 % output. The control signal generated by the CPU 141 is outputted to the LED driver 12, and the LED driver 12 controls the LED 11 on the basis of the control signal. Thus, the lighting setting of the LED 11 is changed on the basis of the sensing information and the operation is determined by the control program 101 corresponding to the sensor 15 and/or the control program 105 corresponding to the additional sensor 4. For easy understanding, discussion is made on the case where the control program 105 is added to perform the control in accordance with the additional sensor 4. Though there may be a case where the control program 105 is also executed besides the control program 101, if the control in accordance with the additional sensor 4 is performed additionally to the control in accordance with the sensor 15, the control program 101 may be so revised as to be corresponding to both the sensors.

### {4. Procedure of Specification Change of Lighting System}

It is assumed that a user requests that the lighting setting of the lighting system should be changed. The user uses a human body sensor as the sensor 15 and uses the lighting system as a warning system. At present, the LED 11 is controlled so as to be lit up with 100 % output when a human body is detected. The user, however, desires that the LED 11 should be blinked at intervals of 0.1 seconds in order to warn more strongly when a human body is detected. Further, though the LED 11 is controlled so as to be lit white by adjusting the outputs of RGB at present, the user desires that the LED 11 should be blinked in red in order to warn more strongly.

In response to the changes, a provider of the lighting system first revises the control program 101. Specifically, the control program 101 is revised so that such a control signal can be generated as to blink the LED 11 in red in response to an input of the detection information of a human body. Since the revision of the control program 101 is made by using an existing control program, it is relatively easy to revise the program.

The serviceman 3 installs the updated control program 101 into the PC 2 and then goes to a place in which the lighting unit 1 is set up. The serviceman 3 moves up to near the lighting unit 1 and transfers the updated control program 101 to the lighting unit 1 from the PC 2 via wireless communication. In the lighting unit 1, the control program 101 stored in the memory 142 is updated. When the update of the control program 101 is completed normally, the LCD 19 is lit, for example, in green. The serviceman 3 can thereby confirm that the update is completed. When the update of the control program 101 causes an error, the LCD 19 is blinked, for example, in red, to thereby notify the serviceman 3 of occurrence of the error.

It is assumed that the user requests that a new sensor should be added to the lighting system. The user originally controls the lighting setting by using the human body sensor which is attached by default. The user desires to additionally attach an illuminance sensor to the lighting system and perform the control of the lighting setting in accordance with the illuminance, together with the control in accordance with the detection of a human body. Further, the user desires to change the color of lighting to a warm color during the night in order to change the atmosphere in the facility.

The provider of the lighting system generates a control program 105 corresponding to the additional sensor 4, i.e., the illuminance sensor. The control program 105 is a program used to control the lighting setting on the basis of the detection information from the illuminance sensor. Alternatively, the provider of the lighting system may revise the control program 101. The revised control program 101 is a program used to acquire the detection information from the human body sensor and the detection information from the illuminance sensor and control the lighting setting on the basis of these two pieces of detection information.

When the new or revised control program is completed, the serviceman 3 installs the control program into the PC 2 and then goes to a place in which the lighting unit 1 is set up. The serviceman 3 attaches the illuminance sensor to the sensor connector 16 of the lighting unit 1 as the additional sensor 4. The serviceman 3 transfers the new control program 105 or the revised control program 101 to the lighting unit 1 from the PC 2 via wireless communication. If the lighting unit 1 has to be detached from the pole in order to attach the additional sensor 4, the updated control program may be transferred by connecting the PC 2 and the lighting unit 1 with the communication cable.

Thus, in the lighting system of the preferred embodiment, the lighting setting in accordance with the sensing information is determined by software. Therefore, it is possible to easily change the lighting setting only by revising the control program 101. In response to the request of the user, it is possible to freely change the settings of the illuminance of the lighting device and the light emission pattern. In the preferred embodiment, since the LEDs of three colors of RGB are used, it is possible to emit light of various colors and present various illumination patterns in accordance with the request of the user.

Further, since the lighting unit 1 has the wireless unit 17, it is easy to update the control program 101. In the prior art, in order to change the lighting setting in accordance with the sensing information, it is necessary to change a hardware logic circuit, and it therefore takes time and cost. By the lighting system of the present invention, it is possible to change the lighting setting with less time and cost.

### {5. Collection of Log Data}

As discussed above, the log making program 102 is stored in the memory 142. The log making program 102 is a program used to record the log of the control signal outputted from the CPU 141 to the LED 11. The log making program 102 accumulates the logs of the control signals as log data 103 in the memory 142.

By consulting the log data 103, it is possible to know how the LED 11 was lit with what output, or how long the LED 11 was lit. Further, since the RTC 145 is connected to the CPU 141, the log making program 102 records the logs of the control signals outputted to the LED 11, together with signal generation time information, into the log data 103. It is thereby possible to analyze the operating conditions of the lighting unit 1 by time zone in various manners.

### {6. Others}

In the above-discussed preferred embodiment, the case has been discussed where the lighting unit 1 is an integral-type unit which comprises the lighting device including the LED 11, the control device including the control part 14, and the sensor 15. In the lighting unit 1, however, the lighting device and the control device may be provided as different units. There may be a configuration where the control device is accommodated inside the pole or the wall and the lighting device is attached to the pole or the wall. Further, though the default sensor 15 is integrally attached in the unit in the above-discussed case, the default sensor 15 may be attached as a different unit.

In the above-discussed preferred embodiment, the lighting unit 1 acquires the control program from PC 2 through a wireless communication interface or a wired communication interface. As another exemplary case, the control program may be transferred through a detachable/attachable memory medium. In such a case, the lighting unit 1 comprises an interface for the detachable/attachable memory medium (memory slot), and by inserting therein the memory medium in which the control program is stored, the control program can be installed.

In the above-discussed preferred embodiment, the case has been discussed where one lighting unit 1 is set up in the parking area. The number of lighting units 1 is not limited to one, and a plurality of lighting units 1 may be set up. There may be a case where five to ten lighting units 1, for example, are set up in a facility and each of the lighting units 1 performs the lighting control in accordance with the corresponding sensing information. Each of the lighting units 1 is an autonomous unit which operates in accordance with the sensor connected thereto. Even in a case where a large number of lighting units 1 are set up in the same facility, the lighting units 1 may perform different operations if the external environments are different depending on the places where the respective lighting units 1 are set up. Alternatively, the control program may be adjusted to absorb the difference in the environments so that a large number of lighting units 1 in the facility may perform the same operation.

While the invention has been shown and described in detail, the foregoing description is in all aspects illustrative and not restrictive. It is therefore understood that numerous modifications and variations can be devised without departing from the scope of the invention.

## Claims

1. A lighting system, comprising:
a lighting device;
a driver for controlling said lighting device;
a sensor interface;
a program storage part for storing therein a control program to be used to control said lighting device on the basis of sensing information which is inputted from a sensor connected to said sensor interface;
a processing unit for inputting sensing information from said sensor interface and executing said control program stored in said program storage part, to thereby output a control signal corresponding to said sensing information to said driver; and
an input interface for inputting said control program corresponding to said sensor connected to said sensor interface from the outside.

2. The lighting system according to claim 1, wherein
said input interface includes a communication interface.

3. The lighting system according to claim 1, wherein
said input interface includes an interface for a detachable/attachable storage medium.

4. The lighting system according to claim 1, further comprising:
an additional sensor interface for connecting an additional sensor thereto,
wherein said processing unit includes
an additional sensor control part for inputting thereto sensing information from said additional sensor interface and executing an additional control program stored in said program storage part, to thereby output a control signal corresponding to said sensing information to said driver.

5. The lighting system according to claim 1, further comprising:
a log information storage part for storing therein a result of controlling said lighting device on the basis of said control program as log information.
